# EUROPEAN PATENT APPLICATION

(11) **EP 4 600 068 A1**
(43) Date of publication of application: **13.08.2025**
(21) Application number: 24156761.9
(22) Date of filing: 09.02.2024
(51) Int. Cl.: B60L 1/00

(54) **WORK MACHINE CONTROL METHOD, WORK MACHINE CONTROL SYSTEM, AND WORK MACHINE**

(71) Applicant: Yanmar Holdings Co., Ltd., Osaka-shi, Osaka (JP)
(72) Inventor: Carton, Alexandre, Saint-Dizier (FR)
(74) Representative: Sekiguchi, Kazuya

(57) **Abstract**

[Problem] Eectric power can be supplied to both an electric load and a battery by a simple method with a configuration using a plurality of voltage converters.

[Solution] In a work machine control method, a plurality of voltage converters is used and electric power supplied from a power storage device is stepped down by the voltage converters and supplied to a battery. The work machine control method includes supplying electric power stepped down by at least one of the plurality of voltage converters to an electric load as well as to the battery.

## Description

### TECHNICAL FIELD

The present invention relates to a work machine control method, a work machine control system, and a work machine, and the work machine is, for example, an electric hydraulic excavator.

### BACKGROUND ART

Conventionally, an electric work vehicle provided with a voltage converter has been proposed (see, for example, Patent Document 1). The voltage converter steps down electric power from a battery for traveling and supplies the stepped down electric power to a battery for an auxiliary machine. Note that hereafter, in order to clearly distinguish between the battery for traveling and the battery for an auxiliary machine, the battery for traveling is also referred to as a power storage device, and the battery for an auxiliary machine is also referred to simply as a battery.

### PRIOR ART DOCUMENT

### PATENT DOCUMENT

Patent Document 1: EP 3988365 A1

### SUMMARY OF INVENTION

### TECHNICAL PROBLEM

When electric power is supplied from the power storage device to the battery via the voltage converter, sufficient electric power to be supplied to the battery may not be obtained depending on the voltage converter used. In this case, it is necessary to supply electric power to the battery by using a plurality of voltage converters. On the other hand, an electric power amount output from the voltage converter needs to be balanced with an electric power supply amount to the electric power supply destination including the battery. Therefore, for example, when the amount of electric power output from the voltage converter is larger than the electric power supply amount to the battery, it is effective to supply surplus electric power to an electric load (for example, a cooling fan driving motor, an air conditioner, etc.). At this time, it is desirable to supply electric power to both the electric load and the battery by a simple method without configuring a complicated system.

The present invention has been made to solve the above-mentioned problems, and an object thereof is to provide a work machine control method, a work machine control system, and a work machine that can supply electric power to both an electric load and a battery by a simple method with a configuration using a plurality of voltage converters.

### SOLUTION TO PROBLEM

A work machine control method according to an aspect of the present invention is a work machine control method in which a plurality of voltage converters is used and electric power supplied from a power storage device is stepped down by the voltage converters and supplied to a battery, the work machine control method includes supplying electric power stepped down by at least one of the plurality of voltage converters to an electric load as well as to the battery.

A work machine control system according to another aspect of the present invention is a work machine control system in which a plurality of voltage converters is included and electric power supplied from a power storage device is stepped down by the voltage converters and supplied to a battery, the work machine control system includes a control unit that performs control to supply electric power stepped down by at least one of the plurality of voltage converters to an electric load as well as to the battery.

A work machine according to still another aspect of the present invention includes the control system, an electric motor that is driven by electric power supplied from the power storage device of the control system; a hydraulic pump that is driven by the electric motor; and a hydraulic actuator that is driven by hydraulic oil supplied by the hydraulic pump.

### ADVANTAGEOUS EFFECTS OF INVENTION

With the configuration using the plurality of voltage converters, it is possible to supply electric power to both the electric load and the battery by a simple method.

### BRIEF DESCRIPTION OF DRAWINGS

FIG. 1 is a side view illustrating a schematic configuration of a hydraulic excavator, which is an example of an electric work machine according to an embodiment of the present invention.
FIG. 2 is a block diagram schematically illustrating a structure of electric and hydraulic systems of the hydraulic excavator.
FIG. 3 is a flowchart illustrating a flow of processing by driving control of a plurality of voltage converters provided in the hydraulic excavator.

### DESCRIPTION OF EMBODIMENTS

An embodiment of the present invention will be described below with reference to the drawings.

### [1. Work Machine]

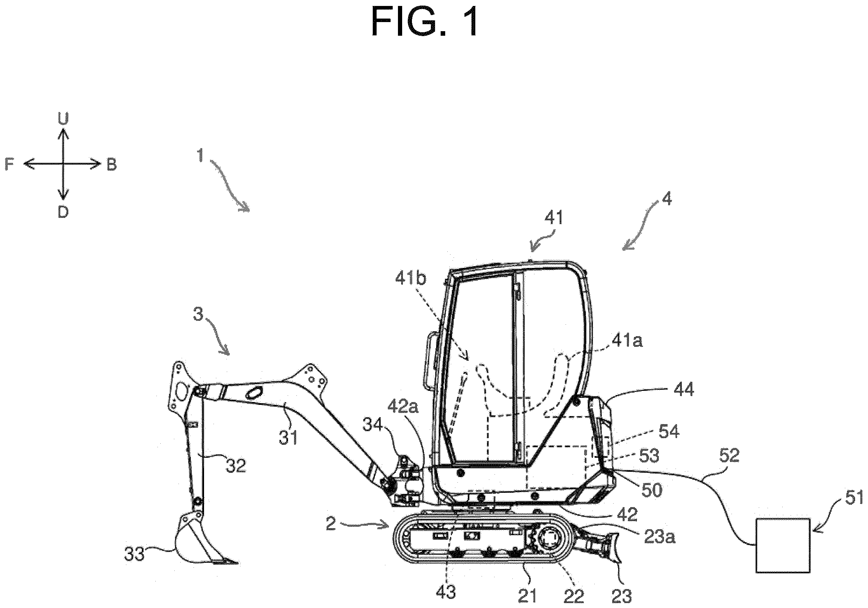

FIG. 1 is a side view illustrating a schematic configuration of a hydraulic excavator (electric excavator) 1, which is an example of an electric work machine of the present embodiment. The hydraulic excavator 1 includes a lower traveling body 2, a work instrument 3, and an upper swivel body 4.

Here, directions are defined as follows. A forward direction is a direction in which an operator (manipulator, driver) seated on a driver's seat 41a of the upper swivel body 4 faces front, and a backward direction is a direction opposite to the forward direction. Therefore, in a state where the upper swivel body 4 does not swivel with respect to the lower traveling body 2 (0-degree swivel angle), a front-back direction of the upper swivel body 4 coincides with a direction in which the lower traveling body 2 moves forward and backward. As viewed from the operator seated on the driver's seat 41a, a left side is defined as "left" and a right side is defined as "right". A gravity direction perpendicular to the front-back direction and a left-right direction is defined as an up-down direction, in which an upstream side of the gravity direction is defined as "up", and a downstream side thereof is defined as "down". In the drawings, the hydraulic excavator 1 is illustrated in a state where the upper swivel body 4 does not swivel with respect to the lower traveling body 2. In addition, in the drawings, if necessary, forward is denoted by a symbol "F", likewise, backward by "B", rightward by "R", leftward by "L", upward by "U", and downward by "D".

The lower traveling body 2 is provided with a pair of left and right crawlers 21 and a pair of left and right traveling motors 22. Each traveling motor 22 is a hydraulic motor. The left and right traveling motors 22 drive the left and right crawlers 21, respectively, thereby allowing the hydraulic excavator 1 to move forward and backward. The lower traveling body 2 is provided with a blade 23 for performing a ground leveling work and a blade cylinder 23a. The blade cylinder 23a is a hydraulic cylinder to rotate the blade 23 in the up-down direction.

The work instrument 3 includes a boom 31, an arm 32, and a bucket 33. The boom 31, the arm 32, and the bucket 33 can be independently driven to perform excavation work of earth, sand, etc.

The boom 31, the arm 32, and the bucket 33 are rotated by an unillustrated boom cylinder, an unillustrated arm cylinder, and an unillustrated bucket cylinder, respectively. The boom cylinder, the arm cylinder, and the bucket cylinder are each constituted of a hydraulic cylinder.

A base end portion of the boom 31, i.e., the boom 31's end portion opposite the side connected with the arm 32 is swingably coupled via a bracket 34 to a tip end portion 42a of a swivel frame 42. That is, the hydraulic excavator 1 of the present embodiment has a boom swing function with which the boom 31 swings to the right and left starting from the tip end portion 42a.

The upper swivel body 4 is positioned above the lower traveling body 2, and is so provided as to be swivelable via a swivel bearing (not illustrated) relative to the lower traveling body 2. The upper swivel body 4 includes a steering part 41, a swivel frame 42 (machine body frame), a swivel motor 43, a machine room 44, and the like. By the driving of the swivel motor 43 that is a hydraulic motor, the upper swivel body 4 swivels via a swivel bearing.

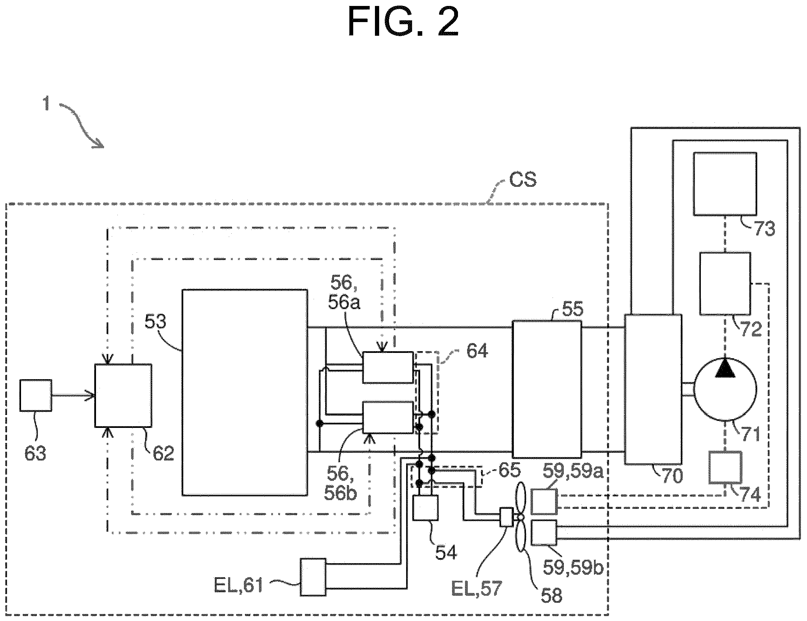

A hydraulic pump 71 (see FIG. 2) is arranged in the upper swivel body 4. The hydraulic pump 71 is driven by an electric motor 70 (see FIG. 2) inside the machine room 44. The hydraulic pump 71 supplies a hydraulic oil (pressure oil) to hydraulic motors (for example, the left and right traveling motors 22 and the swivel motor 43), and hydraulic cylinders (for example, the blade cylinder 23a, the boom cylinder, the arm cylinder, and the bucket cylinder). The hydraulic motors and the hydraulic cylinders that are driven with the hydraulic oil supplied from the hydraulic pump 71 are collectively referred to as hydraulic actuators 73 (see FIG. 2).

The driver's seat 41a is arranged in the steering part 41. Various levers 41b are arranged around the driver's seat 41a. The operator is seated on the driver's seat 41a and operates the levers 41b, thereby driving the hydraulic actuators 73. This enables the lower traveling body 2 to travel, the blade 23 to perform the ground leveling work, the work instrument 3 to perform the excavation work, and the upper swivel body 4 to swivel, etc.

A power storage device 53 is arranged in the upper swivel body 4. The power storage device 53 includes, for example, a lithium ion battery unit, and is a battery unit (high voltage battery) for storing electric power for driving the electric motor 70. The output voltage of the power storage device 53 is, for example, 48 V, but is not limited to this value. The power storage device 53 may be formed by unitizing a plurality of battery cells or may be formed by a single battery cell. A power feed port 50 is provided at a rear part of the upper swivel body 4. The power feed port 50 and a commercial power source 51, which is an external power source, are connected via a power feed cable 52. Thus, the power storage device 53 can be charged.

The upper swivel body 4 is further provided with a battery 54. The battery 54 includes, for example, a lead battery, and outputs a direct current voltage of a low voltage (for example, 12 V). The output from the battery 54 is supplied to, for example, a system controller 62 (see FIG. 2) as a control voltage. When a charging voltage of the battery 54 is equal to or larger than a predetermined voltage, the output from the battery 54 can also be supplied to an electric load EL (see FIG. 2). The electric load EL includes a cooling fan driving motor 57 and an auxiliary machine 61 (see FIG. 2), which are described below.

The hydraulic excavator 1 may be so configured as to be a combination of hydraulic devices such as the hydraulic actuators 73 and actuators driven by electric power. The actuators driven by electric power include, for example, electric traveling motors, electric cylinders, and electric swivel motors.

### [2. Configuration of Electric and Hydraulic Systems]

FIG. 2 is a block diagram schematically illustrating the configuration of electric and hydraulic systems of the hydraulic excavator 1. The hydraulic excavator 1 includes a control system CS, the electric motor 70, the hydraulic pump 71, a control valve 72, the hydraulic actuator 73, and a hydraulic oil tank 74. Details of the control system CS will be described below.

The electric motor 70 is driven by electric power supplied from the power storage device 53 of the control system CS via an inverter 55. The electric motor 70 includes a permanent magnet motor or an induction motor.

A plurality of hydraulic pumps 71 is connected to a rotary shaft (output shaft) of the electric motor 70. The plurality of hydraulic pumps 71 include variable displacement and fixed displacement pumps. In FIG. 2, only one hydraulic pump 71 is illustrated as an example. Each hydraulic pump 71 is connected to the hydraulic oil tank 74. When the hydraulic pump 71 is driven by the electric motor 70, the hydraulic oil in the hydraulic oil tank 74 is supplied to the hydraulic actuator 73 via the hydraulic pump 71 and the control valve 72. Thus, the hydraulic actuator 73 is driven. In other words, the hydraulic actuator 73 is driven by the hydraulic oil supplied by the hydraulic pump 71. The control valve 72 is a direction-switching valve that controls a flow direction and a flow rate of the hydraulic oil supplied from the hydraulic pump 71 to the hydraulic actuator 73.

The hydraulic oil, which has reached a high temperature due to the driving of the hydraulic actuator 73, is supplied to a first heat exchanger 59a described below via the control valve 72, and is cooled by heat exchange in the first heat exchanger 59a. The hydraulic oil cooled in the first heat exchanger 59a is returned to the hydraulic oil tank 74.

On the other hand, the electric motor 70 is a water-cooled device, and is cooled by a refrigerant (for example, cooling water). The refrigerant is circulated to and from a second heat exchanger 59b described below via pipes. The refrigerant is cooled by heat exchange in the second heat exchanger 59b. Therefore, by guiding the refrigerant to the electric motor 70, the electric motor 70 can be cooled.

Next, the control system CS will be described in detail. The control system CS includes the inverter 55 in addition to the power storage device 53 and the battery 54 described above. The inverter 55 converts a DC voltage supplied from the power storage device 53 into an AC voltage and supplies the AC voltage to the electric motor 70. Thus, the electric motor 70 is rotated. The supply of the AC voltage (current) from the inverter 55 to the electric motor 70 is based on a rotation command output from the system controller 62.

The control system CS includes a plurality of voltage converters 56. Each of the voltage converters 56 includes, for example, a DC-DC converter, and steps down a DC voltage of a high voltage (e.g., 48 V) supplied from the power storage device 53 to a low voltage (e.g., 12 V). An example in which two voltage converters 56 are used as the plurality of voltage converters 56 in the present embodiment will be described, but a configuration using three or more voltage converters may also be acceptable. When the two voltage converters 56 are distinguished from each other, one voltage converter 56 is also called the first voltage converter 56a, and the other voltage converter 56 is also called a second voltage converter 56b.

Input side terminals of the two voltage converters 56 are connected to positive and negative terminals of the power storage device 53, respectively. Output-side terminals of the two voltage converters 56 are connected to the positive and negative terminals of the battery 54, respectively, via a merging wire 64. That is, the battery 54 is connected to the two voltage converters 56 via the merging wire 64.

A branching wire 65 is branch-connected to the merging wire 64. The branching wire 65 connects a downstream side of the merging wire 64 (a side opposite to the voltage converter 56) and the cooling fan driving motor 57. That is, the cooling fan driving motor 57 is connected to the two voltage converters 56 via the branching wire 65. The cooling fan driving motor 57 is provided to drive a cooling fan 58. The cooling fan 58 cools a heat exchanger 59 by blowing air.

The heat exchanger 59 includes the first heat exchanger 59a and the second heat exchanger 59b. The first heat exchanger 59a includes, for example, an oil cooler. When the hydraulic pump 71 is driven by the electric motor 70, as described above, the hydraulic oil (particularly the hydraulic oil that has reached a high temperature due to the driving of the hydraulic actuator 73) pumped by the hydraulic pump 71 passes through the first heat exchanger 59a. Therefore, the hydraulic oil passing through the first heat exchanger 59a can be cooled by rotating the cooling fan 58 and blowing air to the first heat exchanger 59a to cool the first heat exchanger 59a.

In addition, the refrigerant that cools the electric motor 70 consuming the electric power passes through the second heat exchanger 59b. The second heat exchanger 59b includes, for example, a radiator. The refrigerant flowing through the second heat exchanger 59b can be cooled by rotating the cooling fan 58 and blowing air to the second heat exchanger 59b to cool the second heat exchanger 59b.

The control system CS further includes an auxiliary machine 61. The auxiliary machine 61 includes an air conditioner, a heater, and the like. The auxiliary machine 61 is connected to another wire (a kind of branching wire 65) branched from the merging wire 64.

The control system CS further includes the system controller 62. The system controller 62 includes an electronic control unit, also called an ECU, and is a control unit that performs electrical control of each part of the hydraulic excavator 1. Particularly in present embodiment, the system controller 62 monitors driving states of the plurality of voltage converters 56 and the charging voltage of the battery 54, and control driving of the plurality of voltage converters 56 according to a switching operation of a key switch 63 by the operator. The key switch 63 is turned on by the operator when the hydraulic excavator 1 is driven (during work), and turned off by the operator when the hydraulic excavator 1 is not driven (during stop of work).

### [3. Driving Control of Voltage Converters]

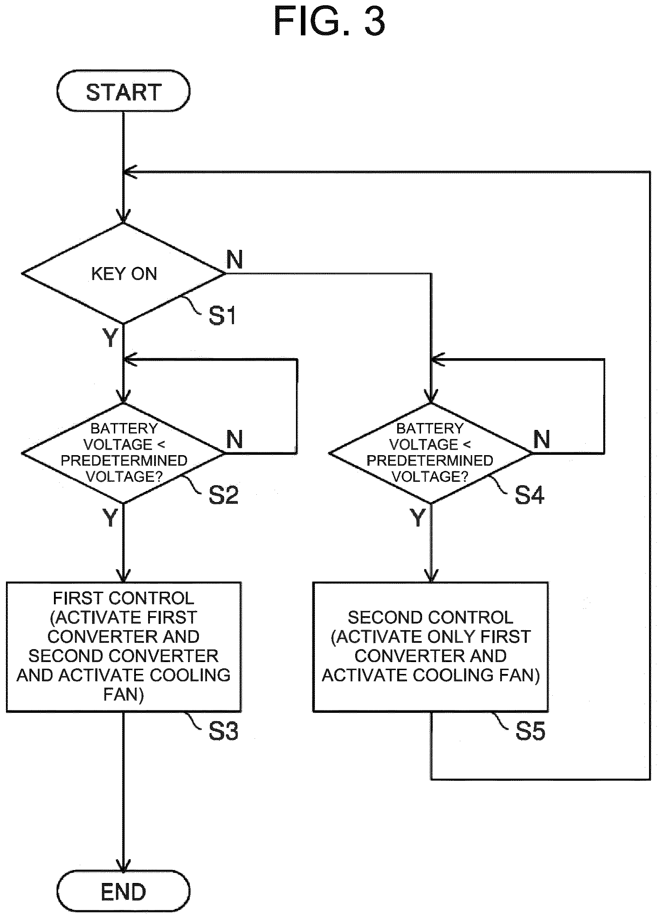

Next, the driving control of the voltage converters 56 of the present embodiment will be described. FIG. 3 is a flowchart illustrating the flow of processing by the driving control of the plurality of voltage converters 56. First, when the key switch 63 is turned on by the operator (Yes in S1), the system controller 62 determines whether the voltage (charging voltage) of the battery 54 is less than the predetermined voltage (S2).

In S2, in a case where the voltage of the battery 54 is equal to or larger than the predetermined voltage (No in S2), standby is continued. On the other hand, in a case where the voltage of the battery 54 is less than the predetermined voltage in S2 (Yes in S2), the system controller 62 performs a first control on the plurality of voltage converters 56 (S3). In the first control, both the first voltage converter 56a and the second voltage converter 56b as the plurality of voltage converters 56 are activated. Accordingly, after the electric power output from the first voltage converter 56a and the second voltage converter 56b are merged in the merging wire 64, a part thereof is supplied to the battery 54, and the rest thereof is supplied to the electric load EL via the branching wire 65. As a result, the battery 54 is charged and the electric load EL is driven. For example, in a case where the electric load EL is the cooling fan driving motor 57, the cooling fan 58 rotates to cool the hydraulic oil and the refrigerant in the heat exchanger 59.

On the other hand, when the key switch 63 is turned off by the operator (No in S1), the system controller 62 determines whether the voltage of the battery 54 is less than the predetermined voltage (S4) as in S2.

In S4, in a case where the voltage of the battery 54 is equal to or larger than the predetermined voltage (No in S4), standby is continued. On the other hand, in a case where the voltage of the battery 54 is less than the predetermined voltage in S4 (Yes in S4), the system controller 62 performs a second control on the plurality of voltage converters 56 (S5). In the second control, only one voltage converter 56 (for example, the first voltage converter 56a) among the plurality of voltage converters 56 continues to be activated, and activation of the other voltage converter 56 (for example, the second voltage converter 56b) is stopped. In this case, only the electric power output from the one voltage converter 56 is supplied to the battery 54 via the merging wire 64, and is supplied to the electric load EL via the branching wire 65. As a result, the battery 54 is charged, and the cooling fan 58, for example, is rotated to blow air to the heat exchanger 59.

As described above, in the control method of the hydraulic excavator 1 of the present embodiment, the plurality of voltage converters 56 is used and electric power supplied from the power storage device 53 is stepped down by the voltage converters 56 and supplied to the battery 54. The control method includes supplying electric power stepped down by at least one of the plurality of voltage converters 56 to the electric load EL as well as to the battery 54 (S3, S5).

Also, in the control system CS of the hydraulic excavator 1 of the present embodiment, the plurality of voltage converters 56 is included, and electric power supplied from the power storage device 53 is stepped down by the voltage converters 56 and supplied to the battery 54. The control system CS includes the system controller 62 as a control unit. The system controller 62 performs control to supply electric power stepped down by at least one of the plurality of voltage converters 56 to the electric load EL as well as to the battery 54 (S3, S5).

According to the above-mentioned control method and control system CS, it is possible to sufficiently secure electric power to be supplied to the battery 54 by using the plurality of voltage converters 56. Also, even when the plurality of voltage converters 56 are used, the electric power output from at least one of the plurality of voltage converters 56 can be supply to both the electric load EL and the battery 54 by a simple method in which the system controller 62 controls the activation of the plurality of voltage converters 56. Thus, the electric power amount output from the voltage converters 56 can be easily balanced with the total electric power supply amount to the battery 54 and the electric load EL. That is, according to the control method of the present embodiment, even when the plurality of voltage converters 56 are used, it is possible to supply electric power to both the electric load EL and the battery 54 by a simple method without configuring the control system CS in a complicated manner.

The electric load EL also includes the cooling fan driving motor 57. When electric power is supplied to the electric load EL, the cooling fan driving motor 57 rotates the cooling fan 58 that cools the heat exchanger 59. Therefore, by supplying the electric power stepped down by the voltage converter 56 to both the electric load EL and the battery 54, the battery 54 is effectively charged while the heat exchanger 59 in need of cooling in the hydraulic excavator 1 is cooled by the cooling fan 58.

The heat exchanger 59 includes the first heat exchanger 59a through which the hydraulic oil passes. With this configuration, the battery 54 is effectively charged while the first heat exchanger 59a in need of cooling in the hydraulic excavator 1 is cooled by the cooling fan 58 and the hydraulic oil is cooled.

The heat exchanger 59 includes the second heat exchanger 59b through which the refrigerant passes. With this configuration, the battery 54 is effectively charged while the second heat exchanger 59b in need of cooling in the hydraulic excavator 1 is cooled by the cooling fan 58 and the refrigerant is cooled.

As in the present embodiment, the electric power stepped down and output by the plurality of voltage converters 56 is merged by flowing through the merging wire 64. The merging wire 64 is connected to the branching wire 65. The branching wire 65 branches on the downstream side of the merging wire 64 to the electric load EL and the battery 54. By providing the merging wire 64 and the branching wire 65 in this manner, whether all or only some of the plurality of voltage converters 56 are activated, the electric power stepped down by the voltage converters 56 is supplied to both the electric load EL and the battery 54.

The control method of the present embodiment includes activating only one of the plurality of voltage converters 56 in a specific state in which the key switch 63 is turned off (S1, S5). In a specific state such as a key-off time, the electric power consumption of the hydraulic excavator 1 is low because work by the hydraulic excavator 1 is stopped. In such a specific state, by minimizing the number of operating voltage converters 56, it is possible to avoid supplying excessive (wasteful) electric power to the electric load EL and the battery 54.

The specific state is not limited to the key-off state described above. For example, a state of low electric power consumption, such as a state in which the inverter 55 and the auxiliary machine 61 are stopped, can be considered a specific state.

The control method of the present embodiment includes activating all of the plurality of voltage converters 56 in a non-specific state other than the specific state (S 1, S3). Here, the specific state is, for example, a key-on state. In a non-specific state such as a key-on time, the electric power consumption may increase as work is performed by the hydraulic excavator 1. In the non-specific state, all voltage converters 56 can be activated to supply the electric load EL with electric power that compensates for the increased electric power consumption.

In present embodiment, at least one of the plurality of voltage converters 56 is activated when the voltage of the battery 54 is lower than the predetermined voltage (S2, S4). When the voltage of the battery 54 is low, the control of the present embodiment in which electric power stepped down by at least one of the plurality of voltage converters 56 is supplied to the electric load EL as well as to the battery 54, is effective.

### [4. Supplementary Description]

In the above, the description has been made with the hydraulic excavator 1, which is a construction machine, as the example of the electric work machine, but the work machine is not limited to the hydraulic excavator 1 and may be any other construction machine such as a wheel loader, or a compact truck loader. Also, the work machine may be an agricultural machine such as a combine harvester, or a tractor.

### [5. Supplementary Notes]

The control method of the hydraulic excavator 1, the control system of the hydraulic excavator 1, and the hydraulic excavator 1 described in present embodiment can also be expressed as the following supplementary notes.

The work machine control method of supplementary note (1) is a work machine control method in which a plurality of voltage converters is used and electric power supplied from a power storage device is stepped down by the voltage converters and supplied to a battery, the work machine control method comprising:
supplying electric power stepped down by at least one of the plurality of voltage converters to an electric load as well as to the battery.

The work machine control method of supplementary note (2) is the control method according to supplementary note (1),
wherein the electric load comprises a cooling fan driving motor that rotates a cooling fan which cools a heat exchanger.

The work machine control method of supplementary note (3) is the control method according to supplementary note (2),
wherein the heat exchanger comprises a first heat exchanger through which hydraulic oil pumped by a hydraulic pump driven by an electric motor passes.

The work machine control method of supplementary note (4) is the control method according to supplementary note (2) or (3),
wherein the heat exchanger comprises a second heat exchanger through which a refrigerant that cools a device consuming electric power passes.

The work machine control method of supplementary note (5) is the control method according to any one of supplementary notes (1) to (4),
wherein the electric power output after being stepped down by the plurality of voltage converters merges by flowing through a merging wire, and
the merging wire is connected to a branching wire that branches on a downstream side to the electric load and the battery.

The work machine control method of supplementary note (6) is the control method according to any one of supplementary notes (1) to (5),
comprising activating only one of the plurality of voltage converters in a specific state.

The work machine control method of supplementary note (7) is the control method according to supplementary note (6),
wherein the specific state is a key-off state.

The work machine control method of supplementary note (8) is the control method according to supplementary note (6) or (7),
comprising activating all of the plurality of voltage converters in a non-specific state other than the specific state.

The work machine control method of supplementary note (9) is the control method according to supplementary note (8),
wherein the non-specific state is a key-on state.

The work machine control method of supplementary note (10) is the control method according to any one of supplementary notes (6) to (9),
wherein at least one of the plurality of voltage converters is activated when a voltage of the battery is lower than a predetermined voltage.

The work machine control system of supplementary note (11) is a work machine control system which comprises a plurality of voltage converters and in which electric power supplied from a power storage device is stepped down by the voltage converters and supplied to a battery, the work machine control system comprising:
a control unit that performs control to supply electric power stepped down by at least one of the plurality of voltage converters to an electric load as well as to the battery.

The work machine of supplementary note (12) comprising:
the control system according to supplementary note (11);
an electric motor that is driven by electric power supplied from the power storage device of the control system;
a hydraulic pump that is driven by the electric motor; and
a hydraulic actuator that is driven by hydraulic oil supplied by the hydraulic pump.

The embodiment of the present invention has been described above. However, the scope of the invention is not limited thereto. The invention can be carried out within an extended or modified range without departing from the gist of the invention.

### INDUSTRIAL APPLICABILITY

The present invention is applicable to work machines such as a construction machine and an agricultural machine, for example.

### REFERENCE SIGNS LIST

1 Hydraulic excavator (work machine)
53 Power storage device
54 Battery
56 Voltage converter
56a First voltage converter
56b Second voltage converter
57 Cooling fan driving motor
58 Cooling fan
59 Heat exchanger
59a First heat exchanger
59b Second heat exchanger
62 System controller (control unit)
64 Merging wire
65 Branching wire
70 Electric motor
71 Hydraulic pump
73 Hydraulic actuator
CS Control system
EL Electric load

## Claims

1. A work machine control method in which a plurality of voltage converters is used and electric power supplied from a power storage device is stepped down by the voltage converters and supplied to a battery, the work machine control method comprising:
supplying electric power stepped down by at least one of the plurality of voltage converters to an electric load as well as to the battery.

2. The work machine control method according to claim 1, wherein the electric load comprises a cooling fan driving motor that rotates a cooling fan which cools a heat exchanger.

3. The work machine control method according to claim 2, wherein the heat exchanger comprises a first heat exchanger through which hydraulic oil pumped by a hydraulic pump driven by an electric motor passes.

4. The work machine control method according to claim 2 or 3, wherein the heat exchanger comprises a second heat exchanger through which a refrigerant that cools a device consuming electric power passes.

5. The work machine control method according to any one of claims 1 to 4, wherein the electric power output after being stepped down by the plurality of voltage converters merges by flowing through a merging wire, and
the merging wire is connected to a branching wire that branches on a downstream side to the electric load and the battery.

6. The work machine control method according to any one of claims 1 to 5, comprising activating only one of the plurality of voltage converters in a specific state.

7. The work machine control method according to claim 6, wherein the specific state is a key-off state.

8. The work machine control method according to claim 6 or 7, comprising activating all of the plurality of voltage converters in a non-specific state other than the specific state.

9. The work machine control method according to claim 8, wherein the non-specific state is a key-on state.

10. The work machine control method according to any one of claims 6 to 9, wherein at least one of the plurality of voltage converters is activated when a voltage of the battery is lower than a predetermined voltage.

11. A work machine control system which comprises a plurality of voltage converters and in which electric power supplied from a power storage device is stepped down by the voltage converters and supplied to a battery, the work machine control system comprising:
a control unit that performs control to supply electric power stepped down by at least one of the plurality of voltage converters to an electric load as well as to the battery.

12. A work machine, comprising:
the control system according to claim 11;
an electric motor that is driven by electric power supplied from the power storage device of the control system;
a hydraulic pump that is driven by the electric motor; and
a hydraulic actuator that is driven by hydraulic oil supplied by the hydraulic pump.
